# EUROPÄISCHE PATENTANMELDUNG

(11) **EP 4 456 025 A2**
(43) Veröffentlichungstag der Anmeldung: **30.10.2024**
(21) Anmeldenummer: 24196427.9
(22) Anmeldetag: 04.10.2017
(51) Int. Cl.: G07F 7/06

(54) **DETEKTIONSVERFAHREN UND VORRICHTUNG ZUR ERFASSUNG VON SICHERHEITSMERKMALEN BEI PFANDSYSTEMEN**

(30) Priorität: 04.10.2016 DE 102016011766
(62) Teilanmeldung aus: 17787352.8
(71) Anmelder: QUISS Qualitäts-Inspektionssysteme und Service GmbH, 82178 Puchheim (DE)
(72) Erfinder: GRUBER, Bernhard, 82131 Stockdorf (DE)
(74) Vertreter: Kehl, Ascherl, Liebhoff & Ettmayr Patentanwälte Partnerschaft mbB

(57) **Zusammenfassung**

Die Erfindung bezieht sich auf ein Verfahren und eine Vorrichtung zum Ausführen des Verfahrens. Die Vorrichtung umfasst dabei mindestens eine Beleuchtungseinrichtung (6) zum Beleuchten von zumindest einem Anteil der Verpackung (4) oder des Verpackungsbestandteils mit einer ersten Wellenlänge und mit Licht einer Vielzahl weiterer Analyse-Wellenlängen, eine Kameraeinrichtung (8) zum Erfassen der Wellenlängen und zur Bereitstellung von Identifikations-Bilddaten (26) und zur Bereitstellung von Analyse-Bilddaten, eine Auswerteeinrichtung (12) zum Auswerten der Analyse-Bilddaten, wobei eine mathematische Aufbereitung der erfassten Analyse-Bilddaten und/oder ein Abgleich der erfassten Analyse-Bilddaten als Soll-Ist-Wert-Vergleich mit hinterlegten Spektralanalysedaten des Sicherheitsmerkmals erfolgt und eine Ausgabeeinrichtung zum Ausgeben eines Ergebniswerts oder Ergebnissignals in Abhängigkeit von der Auswertung, die angibt, ob das Sicherheitsmerkmal der Sicherheitsmarkierung einen als valide definierten Parameter der Pfandverpackung oder des Pfandverpackungsbestandteils wiedergibt.

## Beschreibung

Die vorliegende Erfindung bezieht sich gemäß Anspruch 1 auf ein Verfahren zum Überprüfen von zumindest einem mittels einer Sicherheitsfarbe erzeugtem farblichen Sicherheitsmerkmal einer Sicherheitsmarkierung auf einer Pfandverpackung oder eines Pfandverpackungsbestandteils. Ferner bezieht sich die Erfindung auf eine Vorrichtung gemäß Anspruch 12, auf einen Rücknahmeautomat für Pfandverpackungen gemäß Anspruch 14 und auf ein Computer Programm Produkt gemäß Anspruch 15.

Es ist Aufgabe der vorliegenden Erfindung ein verbessertes Verfahren zur Analyse von Sicherheitsmerkmalen bei Pfandsystem, insbesondere im Bereich der Lebensmittelverpackungen, bereitzustellen. Das verbesserte Verfahren dient bevorzugt zum besserten Erfassen von auf Pfandgegenständen, wie z.B. Lebensmittelbehältern, insbesondere Getränkebehältern, insbesondere Flaschen und/oder Dosen, angebrachten Sicherheitsmerkmalen, wenn diese Sicherheitsmerkmale gegenüber einer Kameraeinrichtung bewegt werden.

Die zuvor genannte Aufgabe wird durch eine Verfahren gemäß Anspruch 1 gelöst. Das Verfahren umfasst dabei mindestens die Schritte: Beleuchten der Verpackung oder des Verpackungsbestandteils mit Licht einer ersten Wellenlänge, Erfassen zumindest eines Anteils der reflektierten Lichtmenge mittels einer Kameraeinrichtung zur Bereitstellung von Identifikations-Bilddaten, Wiederholen der zuvor genannten Schritte in vorbestimmten Identifikations-Zeitabständen bis ein vordefiniertes Referenzobjekt der Sicherheitsmarkierung in den Identifikations-Bilddaten identifizierbar ist, Beleuchten der Verpackung oder des Verpackungsbestandteils mit Licht einer Vielzahl weiterer Analyse-Wellenlängen, wobei die Verpackung oder der Verpackungsbestandteil nacheinander mit den einzelnen weiteren Analyse-Wellenlängen beleuchtet wird, um verschiedene Analyse-Bilddaten des Sicherheitsmerkmals in Abhängigkeit von den Analyse-Wellenlängen zu erzeugen, wobei die einzelnen Beleuchtungen mit den weiteren Analyse-Wellenlängen nacheinander in Analyse-Zeitabständen erfolgen, wobei die Analyse-Zeitabstände kürzer sind als die Identifikations-Zeitabstände, Erfassen zumindest eines Anteils der reflektierten Lichtmenge des Lichts jeder weiteren Analyse-Wellenlänge mit der Kameraeinrichtung (8) zur Bereitstellung von Analyse-Bilddaten, Auswerten der Analyse-Bilddaten, wobei eine mathematische Aufbereitung der erfassten Analyse-Bilddaten und/oder ein Abgleich der erfassten Analyse-Bilddaten als Soll-Ist-Wert-Vergleich mit hinterlegten Spektralanalysedaten des Sicherheitsmerkmals erfolgt und Ausgeben eines Ergebniswerts oder Ergebnissignals in Abhängigkeit von der Auswertung, die angibt, ob das Sicherheitsmerkmal der Sicherheitsmarkierung einen als valide definierten Parameter der Pfandverpackung oder des Pfandverpackungsbestandteils wiedergibt.

Eine solche erfindungsgemäße Vorrichtung umfasst somit bevorzugt mindestens eine Beleuchtungseinrichtung mit mehreren Beleuchtungswellenlängen zum Beleuchten von zumindest einem Anteil der Verpackung oder des Verpackungsbestandteiles, eine Kameraeinrichtung zum Erfassen von mehreren Aufnahmen des farblichen Sicherheitsmerkmals der Verpackung oder dem Verpackungsanteil während der, synchron zur Aufnahme geschalteten, Beleuchtung der Verpackung oder des Verpackungsbestandteils mittels der Beleuchtungseinrichtung, wobei jede der Aufnahmen eine Menge an reflektiertem Licht einer vorbestimmten Wellenlänge repräsentiert, wobei die Wellenlänge zumindest hinsichtlich der Aufnahmen voneinander verschieden sind und damit die spektrale Reflexionseigenschaft der Sicherheitskennzeichnung repräsentieren und eine Auswerteinheit zum Bestimmen der Menge an reflektiertem Licht je erfasster Aufnahme und zum Abgleichen der erfassten Werte oder einer mathematischen Aufbereitung der erfassten Werte mit einem Referenzkriterium und zum Ausgeben eines Ergebniswerts oder Ergebnissignals in Abhängigkeit von dem Abgleich.

Diese Lösung ist vorteilhaft, da sehr genau und wiederholbar die spezielle Eigenschaft der Sicherheitskennzeichnung, nämlich der Veränderung des Reflexionsgrades in Abhängigkeit von der jeweiligen Wellenlänge der Beleuchtung, erfasst und als Sicherheitskriterium verwendet werden kann.

Als eine Sicherheitskennzeichnung wird im Rahmen der vorliegenden Erfindung eine Farbe bezeichnet, deren Reflexionsverhalten bei unterschiedlichen Beleuchtungswellenlängen bekannt ist. Sie weist bevorzugt überwachte und kontrolliert ausgegebene Farbpartikel und Bestandteile auf die die Verwendung der Sicherheitsfarbe repräsentieren. Bevorzugt handelt es sich bei der Sicherheitskennzeichnung um eine Kennzeichnung der DPG Deutsche Pfandsysteme GmbH.

Ein Beleuchten der Sicherheitskennzeichnung mit Licht jeweils einer Wellenlänge und einer gleichzeitigen Bildaufnahme ist zu verstehen, dass das reflektierte Licht von der Kameraeinrichtung erfasst wird. Abhängig von der erforderlichen Anzahl von Beleuchtungswellenlängen werden, zeitlich versetzt, nacheinander Aufnahmen der Verpackung oder des Verpackungsbestandteiles erzeugt. Bei einer größeren Anzahl von Aufnahmen in Serie (drei oder mehr), würde sich der Zeitraum für die Aufnahme, speziell bei einer Bewegung der Verpackung oder des Verpackungsbestandteiles, enorm verlängern.

Erfindungsgemäß wird dieser Nachteil durch eine Kombination einer schnellen monochromatischen Aufnahme, d.h. nur einer Wellenlänge, in kurzen Abständen mit einem AOI "Area Of Interest" (interessantem Gebiet) kombiniert. Dazu werden Aufnahmen in einem kurzen zeitlichen Intervall, bevorzugt mit einer Wiederholfrequenz von z.B. 30Hz oder 50Hz, mit nur einer Wellenlänge erzeugt und in jeder Aufnahme wird durch die Bildauswerteeinheit die Sicherheitskennzeichnung gesucht. Bevorzugt ist dazu der CCD- oder CMOS-Chip der Kamera auf eine Vollbildaufnahme oder zumindest auf einen großen Bildaufnahmebereich eingestellt. Sobald in einer Aufnahme die Sicherheitskennzeichnung gefunden wurde, kann der Auslesebereich der CCD- oder CMOS-Chip der Kamera auf eine reduzierte Anzahl von Zeilen (Partial Scan) oder auf einen AOI (Area Of Interest) reduziert werden und dies ermöglicht eine sehr schnelle Serienaufnahme mit der erforderlichen Anzahl von Beleuchtungswellenlängen mit einer Wiederholfrequenz von z.B. 500 Hz. Damit kann mit nur einer Kamera eine sehr schnelle und effiziente Überprüfung der Sicherheitskennzeichnung erfolgen. Die Kameraeinrichtung erfasst bevorzugt Bilddaten mit einer Frequenz die kleiner ist als 50 Bilder pro Sekunde. Dies ist vorteilhaft, da sehr günstige Kameraeinrichtungen, wie z.B. Grauwertkameras, verwendet werden können und dennoch eine sehr hohe Erfassungsqualität erreicht wird. Geeignete Grauwertkameras sind beispielsweise unter der Bezeichnung mvBlueFOX3 kommerziell erhältlich, beispielsweise mit Auflösungen von 1280 x 960 Pixeln oder 1280 x 1024 Pixel.

Die einzelnen emittierten Lichtmengen jeder Beleuchtungswellenlänge sind bevorzugt durch die jeweils gleiche Intensität und/oder Energie gekennzeichnet. Dies kann durch eine Stromanpassung in der Ansteuerung der LEDs (Licht-emittierende Diode) oder durch eine Anpassung der Beleuchtungs- oder Belichtungszeit erfolgen. Die jeder Beleuchtungswellenlänge zugehörigen Lichtmengen sind bevorzugt in der Auswerteeinheit hinterlegt und werden besonders bevorzugt normiert zur Auswertung weiterverarbeitet.

Bevorzugt wird bei einer Bewegung der Verpackung oder des Verpackungsbestandteiles, während der zeitlich versetzen Aufnahmen mit nur einer Beleuchtungswellenlänge, sobald in zwei Aufnahmen hintereinander die Sicherheitskennzeichnung gefunden wurde, der Vektor der Bewegung berechnet und die definierte Position der Sicherheitskennzeichnung im Gesamtbild der Kamera kann bevorzugt für die nächste bzw. für die Serienaufnahme mit den unterschiedlichen Beleuchtungswellenlängen vorausberechnet werden. Damit kann bevorzugt der Aufnahmebereich (AOI) für die Serienaufnahme weiter eingeschränkt und die Aufnahmefrequenz erhöht werden.

Weitere bevorzugte Ausführungsformen oder Varianten sind Gegenstand der nachfolgenden Beschreibungsteile oder der Ansprüche.

Gemäß einer weiteren bevorzugten Ausführungsform der vorliegenden Erfindung liegen zumindest die Mehrzahl der hinsichtlich der reflektierten Lichtmenge erfassten Wellenlängen in dem Farbumschlagintervall, wobei in dem Farbumschlagsintervall in einem ersten Bereichsende mindestens 80% des in der entsprechenden Wellenlänge ausgestrahlten Lichts reflektiert wird und in einem zweiten Bereichsende weniger als 20% des in der entsprechenden Wellenlänge ausgestrahlten Lichts reflektiert wird.

Gemäß einer weiteren bevorzugten Ausführungsform der vorliegenden Erfindung ist das erste Bereichsende um mindestens 20nm und bevorzugt um mindestens 30nm und besonders bevorzugt um mindestens 40nm vom zweiten Bereichsende beabstandet, wobei das zweite Bereichsende im Nahen-Infrarotbereich (NIR) liegt.

Darin zeigt:
- Fig. 1a-1c: verschiedene Zeitintervalle, in denen unterschiedliche Lichtwellen emittiert werden;
- Fig. 2a-2c: drei abstrahiert dargestellte bevorzugt Verfahrensschritte des erfindungsgemäßen Verfahrens;
- Fig. 3: einen weiteren bevorzugten und abstrahiert dargestellten Verfahrensschritt des erfindungsgemäßen Verfahrens; und
- Fig. 4: eine schematische Darstellung einer erfindungsgemäßen Vorrichtung zum Ausführen des erfindungsgemäßen Verfahrens.

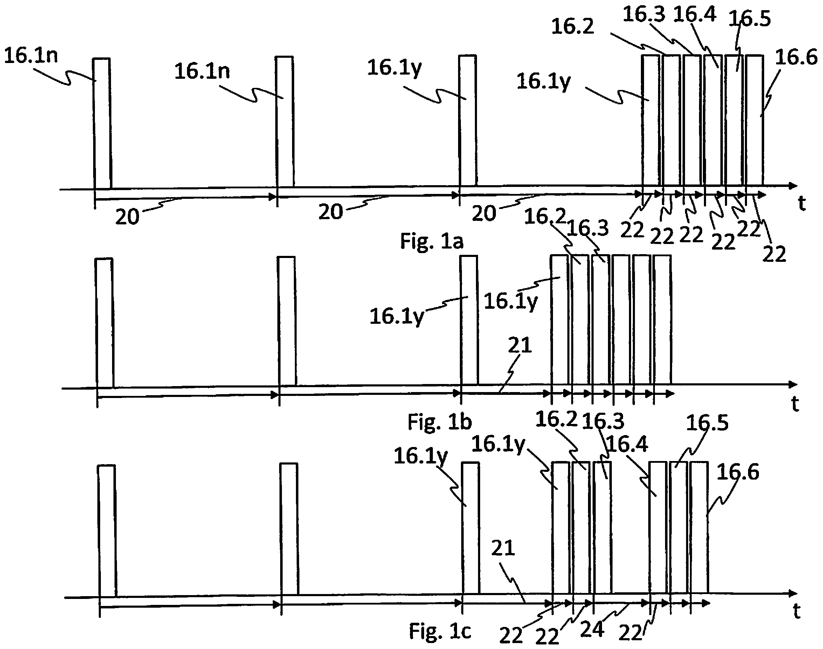

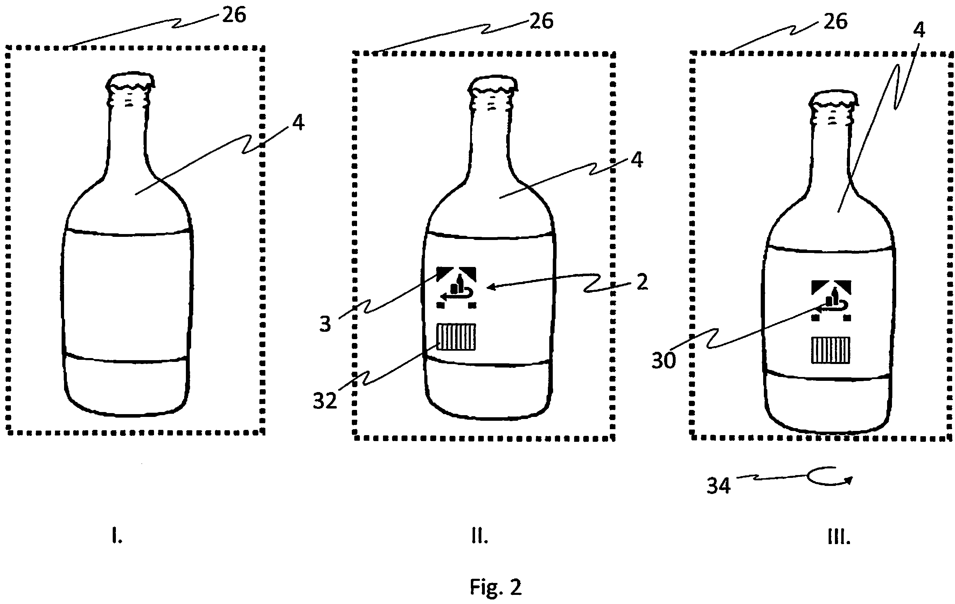

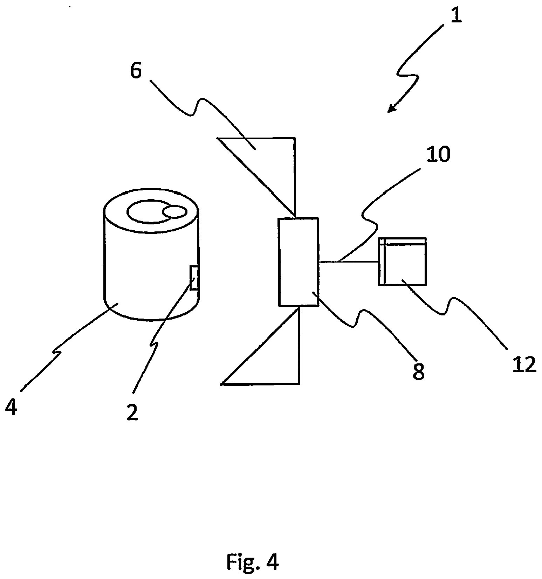

In den Figuren 1a-1c stellt die mit dem Bezugszeichen t gekennzeichnete Achse einen Zeitstrahl dar. Es ist somit ersichtlich, dass die Beleuchtungen 16.1n, 16.1y und 16.2-16.6 nacheinander und bevorzugt zeitversetzt zueinander ausgeführt werden. Die Beleuchtungen 16.1n und 16.1y erfolgen mit derselben Wellenlänge. Die Beleuchtungen 16.1n treten dabei jedoch nicht zwingend auf, da sie Beleuchtungen der Verpackung 4 oder des Verpackungsbestandteils repräsentieren, bei denen kein Referenzobjekt 3 des Sicherheitsmerkmals 2 identifiziert werden konnte. Wurde ein Referenzobjekt 3 identifiziert, so weist das Bezugszeichen anstelle eines "n" ein "y" auf. Wird somit bei der ersten Beleuchtung mit der ersten Wellenlänge bereits ein Referenzobjekt 3 identifiziert, so tritt in diesem Falle kein Bezugszeichen 16.1n auf. Nach der Identifizierung des Referenzobjekts 3, das bevorzugt eine vorbestimmte geometrische Gestalt eines Sicherheitsmerkmals eines Pfandsystems ist, wir bevorzugt eine zweite Beleuchtung der Verpackung 4 oder des Verpackungsbestandteils vorgenommen (vgl. Fig. 2b). Das Zeitintervall kann hierbei dem Identifikations-Zeitintervall 2 entsprechen oder ein Bruchteil davon sein (vgl. Fig. 1b Bezugszeichen 21) oder länger sein. Mit der zweiten bzw. weiteren Erfassung des Referenzobjekts 3 wird bevorzugt ein Bewegungsvektor der Verpackung 4 bzw. des Verpackungsbestandteils bestimmt bzw. berechnet. Dieser Bewegungsvektor kann dann zur Bestimmung der Relativposition des Sicherheitsmerkmals 30 gegenüber der Kameraeinrichtung 8 (vgl. Fig. 4) in Abhängigkeit der Zeit verwendet werden. In Kenntnis der Relativposition des Sicherheitsmerkmals 30 gegenüber der Kameraeinrichtung 8 erfolgt dann bevorzugt eine Reduzierung der auszuwertenden Bilddaten auf einen Bereich, in dem sich das Sicherheitsmerkmal zur jeweiligen Beleuchtung mit Analyse-Wellenlängen befindet bzw. befinden wird. Die anderen Bildbestandteile bzw. Bilddaten, die ein Vielfaches der dann tatsächlich ausgewerteten Bildbestandteile bzw. Bilddaten darstellen, müssen dann nicht analysiert werden, wodurch Rechenleistung einer Auswerteeinrichtung 12 eingespart und/oder die Rechengeschwindigkeit der Auswerteeinrichtung 12 erhöht werden kann.

Ferner wird bevorzugt unmittelbar, insbesondere in einem Analyse-Zeitintervall, nach der Bestimmung des Bewegungsvektors eine Abfolge an Beleuchtungen mit Analyse-Wellenlängen gestartet. Die einzelnen Wellenlängen sind dabei bevorzugt voneinander verschieden.

Fig. 1c zeigt, dass zwischen der Beleuchtung mit den Analyse-Wellenlängen unterschiedliche Zeitintervalle, insbesondere Analyse-Zeitintervalle und/oder Pausen-Zeitintervalle, vorgesehen sein können.

Jede Wellenlänge bevorzugt durch eine eigene Lichtquelle, insbesondere LED bzw. geblitzte LED, erzeugt wird. Ferner kann vor den einzelnen Lichtquellen, insbesondere LEDs, insbesondere der ersten Wellenlänge und/oder einer oder mehreren Analyse-Wellenlängen, der Mehrheit der Lichtquellen oder allen Lichtquellen ein Filter vorgesehen sein. Der Filter ist bevorzugt ein optischer Filter, mit dem sich die auf der Verpackung 4 oder dem Verpackungsbestandteil ankommenden Wellenlängen auf einen Bereich von +/- 15nm und bevorzugt von +/- 10nm und bevorzugt von +/- 5nm und bevorzugt von +/- 1nm begrenzen lassen.

Die Figuren 1a-1c zeigen somit in anderen Worten Zeitschienen mit einem Zeitintervall der Beleuchtungsansteuerung durch die Beleuchtungseinrichtung 6 mit einer Wellenlänge 16.1 und einer synchronen Vollbildaufnahme 22 mit der Kameraeinrichtung 8 in einem Zeitintervall von bevorzugt 20 ms (entspricht 50Hz). Sofern das Sicherheitsmerkmal 2 durch die Auswerteeinrichtung 12 nicht gefunden wird, wird der Zyklus wiederholt. Sobald durch die Auswerteinrichtung 12 das Sicherheitsmerkmal 2 findet, erfolgt eine Beleuchtungsansteuerung durch die Beleuchtungseinrichtung 6 in einer hochfrequenten Serie, bevorzugt in einem Intervall von 2 ms (entspricht 500Hz), von 16.1 bis 16.x und synchron dazu eine Aufnahme mit der Kameraeinrichtung 8 mit einem reduzierten Bildbereich 24.

Es ist damit ersichtlich, dass der reduzierte Bildbereich, definiert von seiner Position durch die Auswerteeinheit aus den Aufnahmen der ersten Wellenlänge 16.1, eine hohe Aufnahmefrequenz der weiteren Wellenlängen 16.1 - 16.x ermöglicht.

Sofern die Verpackung in Bewegung aufgenommen wird, kann bei zwei Aufnahmen mit der ersten Wellenlänge 16.1 der Richtungsvektor für die Serienaufnahme bestimmt werden. Dies ermöglicht, den reduzierten Bildbereich 24 weiter zu reduzieren und die Serienaufnahme mit den weiteren Wellenlängen 16.1 - 16.x zu beschleunigen. Außerdem kann über den Richtungsvektor ein Betrugsversuch durch ein Rückziehen der Verpackung oder des Sicherheitsmerkmals erkannt werden.

Fig. 2a zeigt einen ersten Schritt I. des erfindungsgemäßen Verfahrens. Hierbei wird eine Verpackung 4 oder ein Verpackungsbestandteil mit einer ersten Wellenlänge bzw. mit Strahlung eines ersten Wellenlängenbereichs beleuchtet. Das reflektierte Licht wird erfasst und erfolgt eine Bildauswertung der als Identifikations-Bilddaten 26 bezeichneten Bildinformation. Die Bilddaten weisen hierbei kein Referenzobjekt 3 eines Sicherheitsmerkmals 2 auf, wodurch eine weitere Erfassung durchgeführt wird. Der zuvor beschriebene Schritt beschreibt somit analog den bezüglich des Bezugszeichens 16.1n (Fig. 1a) erläuterten Sachverhalt.

Der Schritt II. zeigt, dass bei einer weiteren Erfassung der ersten Wellenlänge zu einem späteren Identifikations-Zeitintervall 20 (vgl. Fig. 1a) die Identifikations-Bilddaten 26 durch eine Relativbewegung der Verpackung 4 bzw. des Verpackungsanteils ein in den erfassbaren Bereich der Kameraeinrichtung bewegtes Sicherheitsmerkmal 2, insbesondere mit Referenzobjekt 3, aufweisen.

Ferner werden alle weiteren erfassbaren Bestandteile der Verpackung 4 bzw. des Verpackungsbestandteils erfasst, diese können z.B. auch einen Code 32, insbesondere einen Barcode oder QR-Code, aufweisen. Dieser Schritt beschreibt analog den bzgl. des zeitlich älteren Bezugszeichens 16.1y erläuterten Sachverhalt (vgl. Fig. 1a).

Schritt III. zeigt eine weitere Erfassung von Licht der ersten Wellenlänge bzw. des ersten Wellenlängenbereichs. Die Veränderung der Position des Sicherheitsmerkmals bzw. des Referenzobjekts 3 wird dabei bevorzugt ausgewertet bzw. verwendet um einen Bewegungsvektor der Verpackung 4 bzw. des Verpackungsanteils zu bestimmen bzw. zu errechnen. Das Bezugszeichen 34 gibt hierbei schematisch eine Bewegung der Verpackung 4 bzw. des Verpackungsbestandteils an. Die Bewegung 34 kann hierbei bevorzugt rotatorisch und/oder translatorisch sein. Analog hierzu gehören die Ausführungen zu dem zeitlich jüngeren Bezugszeichen 16.1y der Fig. 1a.

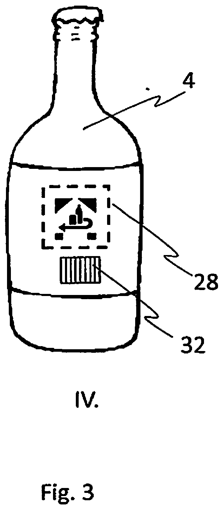

Fig. 3 zeigt einen weiteren Schritt. Bevorzugt werden die auszuwertenden Daten auf Analyse-Bilddaten 28 reduziert, deren Position bzw. Erstreckung im bestimmt oder berechnet wird. Bevorzugt werden die Analyse- Bilddaten 28 mittels des zuvor bestimmten Bewegungsvektors bestimmt, insbesondere für die einzelnen Analyse-Wellenlängen.

Somit bezieht sich die vorliegende Erfindung bevorzugt auf ein Verfahren zum Überprüfen von zumindest einem mittels einer Sicherheitsfarbe erzeugtem farblichen Sicherheitsmerkmal 30 einer Sicherheitsmarkierung 2 auf einer Pfandverpackung 4 oder eines Pfandverpackungsbestandteils. Bevorzugt umfasst das Verfahren mindestens die Schritte:
Beleuchten der Verpackung 4 oder des Verpackungsbestandteils mit Licht einer ersten Wellenlänge. Erfassen zumindest eines Anteils der reflektierten Lichtmenge mittels einer Kameraeinrichtung 8 zur Bereitstellung von Identifikations-Bilddaten 26. Wiederholen der zuvor genannten Schritte in vorbestimmten Identifikations-Zeitabständen bis ein vordefiniertes Referenzobjekt der Sicherheitsmarkierung in den Identifikations-Bilddaten identifizierbar ist. Beleuchten der Verpackung 4 oder des Verpackungsbestandteils mit Licht einer Vielzahl weiterer Analyse-Wellenlängen. Bevorzugt sind die weiteren Analyse-Wellenlängen von der ersten Wellenlänge verschieden. Ferner wird die Verpackung 4 oder der Verpackungsbestandteil nacheinander mit den einzelnen weiteren Analyse-Wellenlängen bevorzugt beleuchtet, um verschiedene Analyse-Bilddaten des Sicherheitsmerkmals in Abhängigkeit von den Analyse-Wellenlängen zu erzeugen. Weiterhin erfolgen besonders bevorzugt die einzelnen Beleuchtungen mit den weiteren Analyse-Wellenlängen nacheinander in Analyse-Zeitabständen. Die Analyse-Zeitabstände sind bevorzugt kürzer als die Identifikations-Zeitabstände. Erfassen zumindest eines Anteils der reflektierten Lichtmenge des Lichts jeder weiteren Analyse-Wellenlänge mit der Kameraeinrichtung 8 zur Bereitstellung von Analyse-Bilddaten. Auswerten der Analyse-Bilddaten. Bevorzugt erfolgt eine mathematische Aufbereitung der erfassten Analyse-Bilddaten und/oder ein Abgleich der erfassten Analyse-Bilddaten als Soll-Ist-Wert-Vergleich mit hinterlegten Spektralanalysedaten des Sicherheitsmerkmals. Ausgeben eines Ergebniswerts oder Ergebnissignals in Abhängigkeit von der Auswertung, die angibt, ob das Sicherheitsmerkmal der Sicherheitsmarkierung einen als valide definierten Parameter der Pfandverpackung oder des Pfandverpackungsbestandteils wiedergibt. Der als valide definierte Parameter ist hierbei bevorzugt ein Parameter, der angibt ab welchem Grad oder Wert das Sicherheitsmerkmal als gefälscht oder als nicht gefällt zu bewerten ist.

Fig. 3 zeigt somit das Kamera-Sichtfeld / Vollbild 26 der Kameraeinrichtung 8 (aus Fig. 2) mit einer Verpackung 4. Auf der Verpackung 4 ist ein Sicherheitsmerkmal 2 und/oder GTIN und/oder Barcode 32 aufgebracht. Die Auswerteeinrichtung 12 reduziert für die Serienaufnahme mit unterschiedlichen Wellenlängen den Bildbereich 26 auf den Bereich 28 des Sicherheitsmerkmals und ermöglicht damit eine schnelle Serienaufnahme mit den unterschiedlichen Wellenlängen.

Fig. 4 zeigt schematisch und rein beispielhaft eine erfindungsgemäße Vorrichtung 1. Diese erfindungsgemäße Vorrichtung 1 weist bevorzugt eine Beleuchtungseinrichtung 6, insbesondere zum definierten Emittieren von vorbestimmten Wellenlängen, auf. Weiterhin ist bevorzugt eine Kamereinrichtung 8 vorgesehen, die als CCD- oder CMOS-Kamera aufgebaut sein kann. Die von der Kameraeinrichtung 8 erfassten Reflektionswerte werden bevorzugt über eine Signal- und/oder Datenverbindung 10, insbesondere eine kabel- oder boardbasierte Leitung, an eine Auswerteeinheit 12 übermittelt. Weiterhin ist eine Verpackung 4 gezeigt, die z.B. als Dose oder PET-Flasche ausgebildet sein kann. Die Verpackung 4 weist dabei ein farbliches Sicherheitsmerkmal 2 auf. Das von der Beleuchtungseinrichtung 6 emittierte Licht trifft daher zunächst aus das Sicherheitsmerkmal 2 nud reflektierte Anteile des Lichtes werden durch die Kameraeinrichtung 8 erfasst. Die Verpackung kann durch eine nicht gezeigt Dreh- und Vorschubvorrichtung ausgerichtet bzw. an der Kamera- und Beleuchtungseinrichtung vorbeigeführt werden.

Eventuell kann noch eine elektronische Steuereinheit für die Beleuchtung (Blitzsteuerung) vorhanden sein bzw. Bestandteil der Vorrichtung sein.

Die Beleuchtungseinheit kann mit der Kameraeinheit zusammengebaut sein und wird dann bevorzugt, insbesondere um Reflexionen zu vermeiden, mit polarisiertem Licht ausgeführt (linearer Polfilter vor Beleuchtungseinheit und ein weiterer, um bevorzugt 90° verdreht, vor der Kamera angeordnet.

Die Kameraeinheit kann mit der Auswerteeinheit über eine interne Daten- und/oder Signalverbindung zu einer komapkten Einheit zusammengebaut sein.

### Bezugszeichenliste:

- 1: Vorrichtung
- 2: Sicherheitsmarkierung
- 3: Referenzobjekt
- 4: Verpackung
- 6: Beleuchtungseinrichtung
- 8: Kameraeinrichtung
- 10: Daten- und/oder Signalverbindung
- 12: Auswerteeinrichtung
- 16.1: Beleuchtung mit erster Wellenlänge
- 16.1n: Beleuchtung mit erster Wellenlänge, wobei Identifikation von Referenzobjekt nicht erfolgte
- 16.1y: Beleuchtung mit erster Wellenlänge, wobei Identifikation von Referenzobjekt erfolgte
- 16.2: Beleuchtung mit zweiter Wellenlänge
- 16.3: Beleuchtung mit dritter Wellenlänge
- 16.4: Beleuchtung mit vierter Wellenlänge
- 16.5: Beleuchtung mit fünfter Wellenlänge
- 16.6: Beleuchtung mit sechster Wellenlänge
- 20: Identifikations-Zeitabstand
- 21: Identifikations-Zeitabstand modifiziert
- 22: Analyse-Zeitabstand
- 24: Pausen-Zeitabstand
- 26: Identifikations-Bilddaten
- 28: Analyse- Bilddaten / Reduzierter Bildbereich (Area of Interest)
- 30: Sicherheitsmerkmal
- 32: Code (Barcode oder QR-Code)
- 34: Bewegung

## Patentansprüche

1. Verfahren zum Überprüfen von zumindest einem mittels einer Sicherheitsfarbe erzeugtem farblichen Sicherheitsmerkmal (30) einer Sicherheitsmarkierung (2) auf einer Pfandverpackung (4) oder eines Pfandverpackungsbestandteils,
mindestens umfassend die Schritte:
Beleuchten der Verpackung (4) oder des Verpackungsbestandteils mit Licht einer ersten Wellenlänge,
Erfassen zumindest eines Anteils der reflektierten Lichtmenge mittels einer Kameraeinrichtung (8) zur Bereitstellung von Identifikations-Bilddaten (26),
Wiederholen der zuvor genannten Schritte in vorbestimmten Identifikations-Zeitabständen bis ein vordefiniertes Referenzobjekt der Sicherheitsmarkierung in den Identifikations-Bilddaten identifizierbar ist,
Beleuchten der Verpackung (4) oder des Verpackungsbestandteils mit Licht einer Vielzahl weiterer Analyse-Wellenlängen,
wobei die Verpackung (4) oder der Verpackungsbestandteil nacheinander mit den einzelnen weiteren Analyse-Wellenlängen beleuchtet wird, um verschiedene Analyse-Bilddaten des Sicherheitsmerkmals in Abhängigkeit von den Analyse-Wellenlängen zu erzeugen,
wobei die einzelnen Beleuchtungen mit den weiteren Analyse-Wellenlängen nacheinander in Analyse-Zeitabständen erfolgen,
wobei die Analyse-Zeitabstände kürzer sind als die Identifikations-Zeitabstände,
Erfassen zumindest eines Anteils der reflektierten Lichtmenge des Lichts jeder weiteren Analyse-Wellenlänge mit der Kameraeinrichtung (8) zur Bereitstellung von Analyse-Bilddaten,
Auswerten der Analyse-Bilddaten,
wobei eine mathematische Aufbereitung der erfassten Analyse-Bilddaten und/oder ein Abgleich der erfassten Analyse-Bilddaten als Soll-Ist-Wert-Vergleich mit hinterlegten Spektralanalysedaten des Sicherheitsmerkmals erfolgt
und
Ausgeben eines Ergebniswerts oder Ergebnissignals in Abhängigkeit von der Auswertung, die angibt, ob das Sicherheitsmerkmal der Sicherheitsmarkierung einen als valide definierten Parameter der Pfandverpackung oder des Pfandverpackungsbestandteils wiedergibt.

2. Verfahren nach Anspruch 1,
**dadurch gekennzeichnet, dass**
in Abhängigkeit des identifizierten Referenzobjekts ein Analyse-Bildbereich definiert wird, der kleiner ist als der bei der Identifikation des Referenzobjekts erfasste Bildbereich, wobei zum Auswerten der Analyse-Bilddaten nur die bezüglich des Analyse-Bildbereichs erfassten Analyse-Bereich-Bilddaten ausgewertet werden.

3. Verfahren nach Anspruch 2,
**dadurch gekennzeichnet, dass**
nach der Identifikation des Referenzobjekts die Verpackung (4) oder der Verpackungsbestandteil mindestens oder genau ein weiteres Mal mit Licht der ersten Wellenlänge beleuchtet wird, wobei zumindest ein Anteil der reflektierten Lichtmenge mittels der Kameraeinrichtung (8) zur Bereitstellung von Bewegungs-Bilddaten erfasst wird, wobei aus den Identifikations-Bilddaten und den Bewegungs-Bilddaten ein Bewegungsvektor der Verpackung (4) oder des Verpackungsbestandteils bestimmt wird.

4. Verfahren nach Anspruch 3,
**dadurch gekennzeichnet, dass**
der Analyse-Bildbereich in Abhängigkeit des Bewegungsvektors für die jeweils einer Analyse-Wellenlänge zugehörigen Analyse-Bilddaten bestimmt wird.

5. Verfahren nach einem der vorangegangenen Ansprüche,
**dadurch gekennzeichnet, dass**
die Analyse-Wellenlängen mehrere Wellenlängen im Bereich zwischen 650nm und 800nm umfassen.

6. Verfahren nach Anspruch 5,
**dadurch gekennzeichnet, dass**
die Analyse-Wellenlängen ferner auch eine oder mehrere Wellenlängen im Bereich zwischen 380nm und 650nm umfasst.

7. Verfahren nach Anspruch 6,
**dadurch gekennzeichnet, dass**
die Wellenlängen im Bereich zwischen 650nm und 800nm, insbesondere zwischen 680nm und 750nm, hinsichtlich eines Farbumschlagsintervall ausgewertet werden
und
die Wellenlänge/n unterhalb dieses Bereichs mittels des Soll-Ist-Wert-Vergleichs ausgewertet wird/werden.

8. Verfahren nach einem der vorangegangenen Ansprüche,
**dadurch gekennzeichnet, dass**
die Identifikations-Zeitabstände zwischen 10ms und 100ms liegen, insbesondere zwischen 30ms und 70ms,
und
die Analyse-Zeitabstände kleiner sind als 10ms, insbesondere kleiner sind als 5ms oder kleiner sind als 2ms oder kleiner sind als 0,5 ms.

9. Verfahren nach einem der vorangegangenen Ansprüche,
**dadurch gekennzeichnet, dass**
die Identifikations-Bilddaten je Erfassung mindestens das 10-fache, insbesondere mindestens das 20-fache oder mindestens das 50-fache oder mindestens das 100-fache, an Bildinformationen umfassen als die Analyse-Bilddaten je Erfassung umfassen.

10. Verfahren nach einem der vorangegangenen Ansprüche,
**dadurch gekennzeichnet, dass**
das Sicherheitsmerkmal (2) mindestens eine weitere Farbe je Verpackung (4) oder Verpackungsbestandteil aufweist,
wobei für die weitere Farbe ebenfalls eine Beleuchtung der Verpackung (4) oder des Verpackungsbestandteils mit Licht unterschiedlicher Wellenlänge, eine Erfassung der reflektierten Lichtmenge bezüglich zumindest fünf vorbestimmter Wellenlängen, wobei die Wellenlänge zumindest hinsichtlich der fünf Aufnahmen voneinander verschieden sind und in einem Farbumschlagsintervall (14) der zweiten Farbe liegen, ein Abgleich der je vorbestimmter Wellenlänge erfassten Lichtmenge oder einer daraus erzeugten mathematischen Aufbereitung mit einem Referenzkriterium und eine Ausgabe eines Signals oder Werts in Abhängigkeit von dem Abgleich erfolgt,
wobei überprüft wird, ob ein Abgleich bzgl. einer Farbe oder alle Abgleiche oder keiner der Abgleiche zu einer Übereinstimmung mit dem Referenzkriterium geführt hat.

11. Verfahren nach Anspruch 10,
**dadurch gekennzeichnet, dass**
hinsichtlich der zweiten Farbe zumindest die Mehrzahl der hinsichtlich der reflektierten Lichtmenge erfassten Wellenlängen in einem Wellenlängenbereich liegen, der **dadurch gekennzeichnet ist, dass** in einem ersten Bereichsende mindestens 80% des in der entsprechenden Wellenlänge ausgestrahlten Lichts reflektiert wird und in einem zweiten Bereichsende weniger als 20% des in der entsprechenden Wellenlänge ausgestrahlten Lichts reflektiert wird.

12. Vorrichtung zum Ausführen eines Verfahrens gemäß einem der vorangegangenen Ansprüche,
mindestens umfassend
eine Beleuchtungseinrichtung (6) zum Beleuchten von zumindest einem Anteil der Verpackung (4) oder des Verpackungsbestandteils mit einer ersten Wellenlänge und mit Licht einer Vielzahl weiterer Analyse-Wellenlängen,
eine Kameraeinrichtung (8) zum Erfassen der Wellenlängen und zur Bereitstellung von Identifikations-Bilddaten (26) und zur Bereitstellung von Analyse-Bilddaten,
eine Auswerteeinrichtung (12) zum Auswerten der Analyse-Bilddaten,
wobei eine mathematische Aufbereitung der erfassten Analyse-Bilddaten und/oder ein Abgleich der erfassten Analyse-Bilddaten als Soll-Ist-Wert-Vergleich mit hinterlegten Spektralanalysedaten des Sicherheitsmerkmals erfolgt
und
eine Ausgabeeinrichtung zum Ausgeben eines Ergebniswerts oder Ergebnissignals in Abhängigkeit von der Auswertung, die angibt, ob das Sicherheitsmerkmal der Sicherheitsmarkierung einen als valide definierten Parameter der Pfandverpackung oder des Pfandverpackungsbestandteils wiedergibt.

13. Vorrichtung nach Anspruch 12,
**dadurch gekennzeichnet, dass**
die Kameraeinrichtung eine CCD-Kamera oder eine CMOS-Kamera ist,
wobei die Kameraeinrichtung (8) Bilddaten mit einer Frequenz erfasst, die kleiner ist als 50 Bilder pro Sekunde.

14. Rücknahmeautomat für Pfandverpackungen zum Ausführen eines Verfahrens gemäß einem der vorangegangenen Ansprüche,
mindestens umfassend eine Vorrichtung nach Anspruch 12 oder 13.

15. Computer Programm Produkt zum Ausführen eines Verfahrens nach einem der Ansprüche 1 bis 11.
